# EUROPÄISCHE PATENTANMELDUNG

(11) **EP 1 531 293 A1**
(43) Veröffentlichungstag der Anmeldung: **18.05.2005**
(21) Anmeldenummer: 04026114.1
(22) Anmeldetag: 04.11.2004
(51) Int. Cl.: F16J 15/34, C23C 24/02

(54) **Gleitringdichtung und Verfahren zur Herstellung derselben**

(30) Priorität: 11.11.2003 DE 10352675
(71) Anmelder: Federal-Mogul Friedberg GmbH, 86316 Friedberg (DE)
(72) Erfinder: Zutz, Hans-Henning, 42929 Wermelskirchen (DE); Buchmann, Michael, Dr., 86316 Freidberg (DE)

(57) **Zusammenfassung**

Gleitringdichtung, insbesondere Laufwerkdichtung (1), bestehend aus einem metallischen Gleit- und/oder Gegenring (2), der im Bereich seiner Lauffläche mit einer Verschleißschutzschicht (8) versehen ist, wobei die Verschleißschutzschicht (8) durch in die Lauffläche eingebettete Hartstoffpartikel gebildet ist.

## Beschreibung

Die Erfindung betrifft eine Gleitringdichtung, insbesondere Laufwerkdichtung, bestehend aus einem metallischen Gleit- und/oder Gegenring, der im Bereich seiner Lauffläche mit einer Verschleißschutzschicht versehen ist.

Durch die US-A 4,505,485 ist eine Laufwerkdichtung bekannt geworden, deren Lauffläche zumindest partiell mit einer Verschleißschutzschicht überzogen ist, dergestalt, dass auf der Lauffläche eine Chrom-, Wolfram-, Vanadium-, Titan-, Niob-, Kobalt- oder Molybdänbeschichtung bedarfsweise in Kombination mit Karbiden oder Kohlenstoff abgeschieden wird. Die Beschichtung wird in Form einer Spirale aufgebracht und durch Umschmelzen gehärtet.

In der US-A 3,086,782 wird eine Laufwerkdichtung beschrieben, die zwei aus abgewinkelten Blechen gebildete Gleitringe aufweist, deren Laufflächen mit einer Verschleißschutzschicht überzogen sind. Die auf Keramikmaterial basierende sehr dünn ausgebildete Verschleißschutzschicht wird im Anschluss an das Läppen der Laufflächen aufgebracht.

Laufwerkdichtungen werden vielfach aus kostenintensiven Materialien wie Duronit, Siculit oder gehärtetem Stahlblech gefertigt, wobei diese Materialien in der Regel für die Erstausrüstung eingesetzt werden. Für Ersatzlösungen bzw. Reparaturfälle wird vielfach auf preiswertere Materialien, wie beispielsweise Kugellagerstähle (100Cr6) zurückgegriffen, so dass die kostenintensiveren Materialien hier in der Regel nicht mehr zum Zuge kommen.

Der Erfindung liegt die Aufgabe zugrunde, eine im gattungsbildenden Teil des ersten Patentanspruches beschriebene Gleitringdichtung dahingehend weiterzubilden, dass sie einerseits die Verschleißeigenschaften der für die Erstausrüstung gegebenen Werkstoffe aufweist, andererseits preislich jedoch den für das Ersatzgeschäft zum Einsatz gelangenden Werkstoffen überlegen ist.

Des weiteren soll ein Verfahren zur Herstellung von Gleit- und/oder Gegenringen einer Gleitringdichtung vorgestellt werden, mit welchem in einfacher und preisgünstiger Form Verschleißschutzschichten auf den Laufflächen der Gleit- und/oder Gegenringe erzeugt werden können.

Gegenständlich wird die Aufgabe dadurch gelöst, dass die Verschleißschutzschicht durch in die Lauffläche eingebettete Hartstoffpartikel gebildet ist.

Vorteilhafte Weiterbildungen des Erfindungsgegenstandes sind den zugehörigen Unteransprüchen zu entnehmen.

Die Aufgabe wird auch gelöst durch ein Verfahren zur Herstellung von Gleit- und/oder Gegenringen einer Gleitringdichtung, insbesondere einer Laufwerkdichtung, indem ein Trägerkörper aus Leichtmetall vorgeformt wird und im Bereich seiner Lauffläche eine Verschleißschutzschicht auf Basis von Hartstoffpartikeln erzeugt wird.

Vorteilhafte Weiterbildungen des erfindungsgemäßen Verfahrens sind den zugehörigen Unteransprüchen zu entnehmen.

Als Trägerkörper für einen, beispielsweise als Laufwerkdichtung verwendbaren Ring wird eine geeignete Leichtmetalllegierung, insbesondere eine Aluminiumlegierung, eingesetzt. Der jeweilige Trägerkörper kann sowohl spanabhebend als auch durch Schmieden, Walzen oder Gießen hergestellt werden.

Zur Erzielung der notwendigen Verschleißfestigkeit an der dichtenden Lauffläche wird feinstkörniges bis pulverförmiges Material durch Schmieden, Walzen oder Eingießen in die Laufflächenoberfläche eingepresst bzw. eingebracht. Hier können beispielsweise Hartstoffpartikel aus Duronit, Carbiden, Nitriden, Oxiden oder anderen geeigneten Materialien vorgebbarer Härte zum Einsatz gelangen.

Indem der Trägerkörper beispielsweise beim Schmieden oder Walzen während des Herstellungsprozesses auf Temperaturen bis zu 500°C vorgewärmt wird, wird das Einbetten der Hartstoffpartikel in die Lauffläche erleichtert.

Von besonderem Vorteil ist der Einsatz von als Abfall bei Schleifprozessen anfallenden Hartstoffpartikeln, so dass das Ausgangsmaterial mehr oder weniger kostenfrei in nahezu reiner Form zur Verfügung steht. Die Hartstoffpartikel können bereits während des eigentlichen Herstellungsprozesses des Trägerkörpers, insbesondere beim Schmieden oder beim Walzen, d.h. in einem einzelnen Fertigungsschritt, in die Laufflächenoberfläche eingebracht werden. Dadurch kann auf einen separaten Beschichtungsprozess verzichtet werden, wodurch die Herstellungskosten stark reduziert werden können.

Bedarfsweise können beim Einbettungsprozess auch Festschmierstoffpartikel, beispielsweise MOS2 oder ähnliche, mit eingebracht werden.

Mit dem Erfindungsgegenstand wird somit ein mehr oder weniger korrosionsfreier Trägerkörper besonders leichter Bauweise bereitgestellt, der unterschiedlichste geometrische Formen für den jeweiligen Anwendungsfall aufweisen kann, in Verbindung mit Verschleißschutzschichten auf Basis unterschiedlichster Hartstoffpartikel. Bevorzugt zum Einsatz gelangt hierbei Duronitpulver, das eine Härte HRC zwischen 57 und 64 aufweist und vorzugsweise aus Schleifprozessen bei der Erzeugung von Laufwerkdichtungsringen für die Erstausrüstung mittels CBN-Scheiben abfällt.

Der Erfindungsgegenstand ist anhand eines Ausführungsbeispiels in der Zeichnung dargestellt und wird wie folgt beschrieben. Es zeigen:
- Figur 1: Beispiel einer Laufwerkdichtung;
- Figur 2: Darstellung des Gleitringes gemäß Figur 1, beinhaltend die erfindungsgemäße Verschleißschutzschicht.

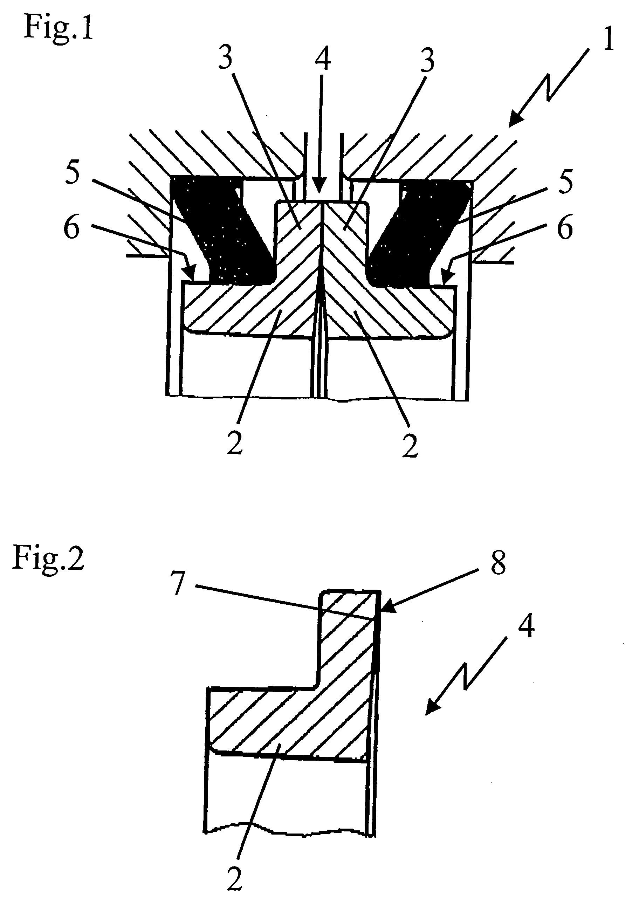

Figur 1 zeigt eine Laufwerkdichtung 1, bestehend aus zwei geometrisch gleichbauenden Gleit- oder Gegenringen 2, so dass im folgenden nur noch von einem Gleitring 2 die Rede ist. Der Gleitring 2 weist einen im wesentlichen winkelförmigen Querschnitt auf. Die Dichtschenkel 3 der Gleitringe 2 erzeugen eine dynamische Dichtstelle 4. Zur Aufnahme eines im Querschnitt trapezförmigen Dichtkörpers 5 weist der Gleitring 2 eine zylindrische Umfangsfläche 6 auf. Die dargestellte Form ist hierbei lediglich als beispielhaft anzusehen.

Figur 2 zeigt als Teildarstellung einen Gleitring 2 gemäß Figur 1. Erkennbar ist die dynamische Dichtstelle 4, gebildet durch eine Lauffläche 7 in Verbindung mit einer Verschleißschutzschicht 8. Der Gleitring 2 soll in diesem Beispiel aus einer Aluminiumlegierung bestehen, wobei die Formgebung durch Walzen im Temperaturbereich von etwa 500°C vorgenommen wurde. Im Verlauf des Formgebungsprozesses des Gleitringes 2 wurden Hartstoffpartikel auf Basis von Duronitpulver, das aus Schleifprozessen bei der Erzeugung von für das Erstgeschäft einsetzbaren Laufwerkdichtungsringen mittels CBN-Scheiben als Abfallprodukt gewonnen wurde, eingesetzt. Nicht zwingend notwendig, aber bedarfsweise sinnvoll, ist die Zugabe von Festschmierstoffpartikeln, beispielsweise MOS2, beim Einbettungsprozess der Hartstoffpartikel in die Lauffläche 7. Dieses Herstellungsverfahren ist lediglich beispielhaft anzusehen.

## Patentansprüche

1. Gleitringdichtung, insbesondere Laufwerkdichtung (1), bestehend aus einem metallischen Gleit- und/oder Gegenring (2), der im Bereich seiner Lauffläche (7) mit einer Verschleißschutzschicht (8) versehen ist, **dadurch gekennzeichnet, dass** die Verschleißschutzschicht (8) durch in die Lauffläche (7) eingebettete Hartstoffpartikel gebildet ist.

2. Gleitringdichtung nach Anspruch 1, **dadurch gekennzeichnet, dass** der Gleit- und/oder Gegenring (2) aus Leichtmetall, insbesondere einer Aluminiumlegierung, besteht.

3. Gleitringdichtung nach einem der Ansprüche 1 oder 2, **dadurch gekennzeichnet, dass** die Hartstoffpartikel eine Härte HRC von mindestens 57 aufweisen.

4. Gleitringdichtung nach einem der Ansprüche 1 bis 3, **dadurch gekennzeichnet, dass** die Hartstoffpartikel durch Schleifpulver gebildet sind.

5. Gleitringdichtung nach einem der Ansprüche 1 bis 4, **dadurch gekennzeichnet, dass** bei der Erzeugung der Verschleißschutzschicht (8) Festschmierstoffpartikel, insbesondere MOS2, den Hartstoffpartikeln zusetzbar sind.

6. Verfahren zur Herstellung von Gleit- und/oder Gegenringen (2) einer Gleitringdichtung, insbesondere einer Laufwerkdichtung (1), indem ein Trägerkörper aus Leichtmetall vorgeformt wird und im Bereich seiner Lauffläche (7) eine Verschleißschutzschicht (8) auf Basis von Hartstoffpartikeln erzeugt wird.

7. Verfahren nach Anspruch 6, **dadurch gekennzeichnet, dass** der Trägerkörper aus einer Aluminiumlegierung hergestellt und die Formgebung des Gleit- und/oder Gegenringes (2) spanend vorgenommen wird.

8. Verfahren nach Anspruch 6, **dadurch gekennzeichnet, dass** der Trägerkörper aus einer Aluminiumlegierung hergestellt und die Formgebung des Gleit- und/oder Gegenringes (2) durch Schmieden, Walzen oder Gießen herbeigeführt wird.

9. Verfahren nach einem der Ansprüche 6 bis 8, **dadurch gekennzeichnet, dass** die Hartstoffpartikel durch Schmieden, Walzen oder Eingießen in die Laufflächenoberfläche eingepresst bzw. eingebracht werden.

10. Verfahren nach einem der Ansprüche 6 bis 9, **dadurch gekennzeichnet, dass** der Gleit- und/oder Gegenring (2) unter Temperatureinwirkung geformt wird, und dass die Hartstoffpartikel im Temperaturbereich oberhalb von 350°C in die Laufflächenoberfläche eingepresst bzw. eingebracht werden.

11. Verfahren nach einem der Ansprüche 6 bis 10, **dadurch gekennzeichnet, dass** die Hartstoffpartikel aus Schleifprozessen gewonnen werden.

12. Verfahren nach einem der Ansprüche 6 bis 11, **dadurch gekennzeichnet, dass** im Zuge der Einbettung der Hartstoffpartikel in die Lauffläche (7) Festschmierstoffpartikel, insbesondere MOS2, zugegeben werden.

13. Verfahren nach einem der Ansprüche 6 bis 12, **dadurch gekennzeichnet, dass** die Hartstoffpartikel mit einer Härte HRC von mindestens 57 für den Aufbau der Verschleißschutzschicht (8) eingesetzt werden.
